# EUROPEAN PATENT APPLICATION

(11) **EP 4 206 313 A1**
(43) Date of publication of application: **05.07.2023**
(21) Application number: 22871085.1
(22) Date of filing: 31.03.2022
(51) Int. Cl.: C12M 1/34, C12M 1/00

(54) **LAMP-BASED MICROFLUIDIC CHIP**

(30) Priority: 12.10.2021 CN 202122453823 U
(71) Applicant: Holosensor Medical Technology Ltd., Kunshan Jiangsu 215300 (CN)
(72) Inventor: YAN, Jing, Kunshan, Jiangsu 215300 (CN); ZOU, Changhua, Kunshan, Jiangsu 215300 (CN); MENG, Runrong, Kunshan, Jiangsu 215300 (CN)
(74) Representative: Fidal Innovation
(86) International application number: PCT/CN2022/084359
(87) International publication number: WO 2023/060849

(57) **Abstract**

A LAMP-based microfluidic chip includes a chip body. The chip body has a sample adding port, a plurality of reacting chambers and a plurality of exhaust ports. Each of the reacting chambers is communicated with the sample port via a first microchannel, each first microchannel has one or more bending sections, and each of the plurality of reacting chambers is further communicated with one of the plurality of exhaust ports via a second microchannel. The microfluidic chip of the present invention can keep the reagents in each reacting chamber from interfering with each other without a control valve or a piston, thus avoiding the formation of contamination, and has a small volume.

## Description

### Technical Field

The present invention belongs to the field of LAMP detection technology, and relates to an LAMP-based microfluidic chip.

### Background of Technology

LAMP (Loop-mediated isothermal amplification) technology is widely used in the field of bio-diagnostics for its advantages such as mild reaction conditions (low reaction temperature) and short reaction time, such as performing nucleic acid amplification tests to diagnose the presence of pathogens in samples. LAMP technology is a process of providing *in vitro* amplification conditions for nucleic acid fragments to amplify exponentially, adding fluorescent dyes or fluorescent markers during the nucleic acid amplification process, using optical devices to detect the intensity of the fluorescent signals, and analyzing the fluorescent signal to obtain the results of nucleic acid amplification. The microfluidic chip is one of the important components of LAMP detection, and it is usually necessary to design a corresponding LAMP detector for the specific microfluidic chip, and during the nucleic acid amplification reaction, the microfluidic chip is placed into the LAMP detector, and the reacting chamber of the microfluidic chip is heated, illuminated and detected. Making the LAMP detector miniaturized and portable is one of the goals of LAMP detector designers, while the structure and size of the microfluidic chip play a crucial role in the design of the LAMP detector.

### Summary of the Invention

The present invention provides a LAMP-based microfluidic chip, which has a small volume.

A LAMP-based microfluidic chip comprises a chip body having a sample adding port, a plurality of reacting chambers and a plurality of exhaust ports, each of the plurality of reacting chambers is communicated with the sample port via a first microchannel, each first microchannel has one or more bending sections, and each of the plurality of reacting chambers is further communicated with one of the plurality of exhaust port via a second microchannel.

In a preferred embodiment, the bending section comprises an arc-shaped bending section that is arc-shaped as a whole.

In an embodiment, a center angle of the arc-shaped bending section is greater than 90 degrees. By avoiding the reagent backflow in the reacting chamber through the bending sections, the LAMP chip can keep the reagents in each reacting chamber from interfering with each other without configuring a control valve or piston to avoid pollution.

In a preferred embodiment, there is only one single sample adding port, so it is only necessary to add samples to one sample adding port, which is convenient to use.

In a more preferred embodiment, the arc-shaped bending section comprises a first arc-shaped bending portion and a second arc-shaped bending portion, and a circle center of the first arc-shaped bending portion and a circle center of the second arc-shaped bending portion are respectively located on two opposite sides of corresponding first microchannel.

Further, a plurality of first arc-shaped bending portions and a plurality of second arc-shaped bending portions are interleaved, and the adjacent first arc-shaped bending portion and the second arc-shaped bending portion are directly connected or connected through a linear channel.

In an embodiment, an overflow groove is further provided on the chip body, and the overflow groove is communicated with or surrounds the sample adding port.

In an embodiment, a positioning ridge is arranged on a left side or a right side of the chip body.

In an embodiment, the microfluidic chip further comprises a cover film which is arranged on a surface of the chip body and covers the exhaust ports to allow gas to pass through but not allow liquid to pass through.

In an embodiment, the microfluidic chip further comprises a first sealing film for sealing the sample adding port and/or the exhaust ports.

In an embodiment, the sample adding port and exhaust ports are arranged on a first surface of the chip body, the reacting chambers are arranged on a second surface of the chip body, and the microfluidic chip further comprises a second sealing film for closing the reacting chambers, and the second sealing film is covered on the second surface.

In a preferred embodiment, there is a plurality of recesses on the second surface of the chip body, and the recesses are covered by the second sealing film.

Further, the first microchannels and the second microchannels are arranged on the second surface of the chip body, and covered by the second sealing film.

In an embodiment, the microfluidic chip comprises a chip shell comprising a shell body and a sealing folding panel, the chip body is mounted in the shell body, and the microfluidic chip has a detection state and an initial state, and the sealing folding panel is connected to the shell body and covers the sample adding port and/or the exhaust ports in the detection state; the sealing folding panel is detached from the sample adding port and the exhaust ports in the initial state.

In an embodiment, the microfluidic chip further comprises a sealing pad that is pressed tightly on the sample adding port and/or the exhaust ports by the sealing folding panel in the detection state.

In an embodiment, the sealing pad is arranged on the sealing folding panel.

In an embodiment, the shell body comprises a first connector, the sealing folding panel is provided with a second connector, the first connector and the second connector are attached to each other during the detection state, and the first connector and the second connector are detached from each other during the initial state.

In an embodiment, the first connector comprises a first lug, and the second connector is clamped between the first lug and the chip body during the detection state.

In an embodiment, the sealing folding panel is connected to the shell body and is configured to rotate relative to the shell body.

In an embodiment, the sealing folding panel is connected to the shell body through a deformable weak portion.

In an embodiment, the weak portion is a folding line extending along a long side direction or a short side direction of the chip body.

In an embodiment, the chip body is embedded in the shell body, the shell body is provided with a second lug, the chip body is provided with a second groove that fits the second lug, the second lug is located within the second groove.

The present invention uses the above solutions, and has the following advantages over the prior art:
the LAMP-based microfluidic chip of the present invention can keep the reagents in each reacting chamber from interfering with each other without a control valve or a piston, thus avoiding the formation of contamination; since the microfluidic chip is not provided with a control valve or piston, the overall size of the microfluidic chip is small (down to 34 mm × 58 mm × 3 mm), thus greatly reducing the overall size of the LAMP detector to which it is adapted and making it suitable for handheld detection.

### Brief Description of the Drawings

For more clearly explaining the technical solutions of the present invention, the accompanying drawings used to describe the embodiments are simply introduced in the following. Apparently, the below described drawings merely show some of the embodiments of the present invention, and those skilled in the art can obtain other drawings according to the accompanying drawings without creative work.
Fig. 1 is a schematic diagram of a LAMP chip according to Embodiment 1 of the present invention, wherein the first surface is covered by the cover film.
Fig. 2 is a schematic diagram of the LAMP chip according to Embodiment 1 of the present invention, wherein the second surface is covered by a cover film.
Fig. 3 is a three-dimensional schematic diagram of the chip body of Embodiment 1.
Fig. 4 is a schematic diagram of the first surface of the chip body of Embodiment 1.
Fig. 5 is a schematic diagram of the second surface of the chip body of Embodiment 1.
Fig. 6 is a side view of the chip body of Embodiment 1.
Fig. 7 is a schematic view of the front side of a microfluidic chip according to Embodiment 2 of the present invention, wherein the folding lug is covered on the chip body.
Fig. 8 is a schematic view of the back side of the microfluidic chip according to Embodiment 2 of the present invention, wherein the folding lug is covered on the chip body.
Fig. 9 is a schematic diagram of the chip body of Embodiment 2.
Fig. 10 is a schematic diagram of the back side of the chip of Embodiment 2.
Fig. 11 is a schematic view of the front side of the microfluidic chip in the initial state of Embodiment 2.
Fig. 12 is a schematic view of the front side of the microfluidic chip in the initial state of Embodiment 2 without the film not shown.
Fig. 13 is a schematic view of the back side of the microfluidic chip in the initial state of Embodiment 2.

### Reference numbers,

7 - microfluidic chip;
70 - chip body; 70a - first surface; 70b - second surface; 701 - sample adding port; 702 - overflow groove; 703 - exhaust port; 704 - reacting chamber; 705 - first microchannel; 705a - first arc-shaped bending portion; 705b - second arc-shaped bending portion; 706 - second microchannel; 707 - groove; 708 - unfilled corner; 71 - cover film; 72 - first sealing film; 73 - second sealing film;
74 - chip shell; 741 - shell body; 741a - first lug; 741b - second lug; 742 - sealing folding panel; 742a - first groove; 743 - fold line;
75 - sealing pad.

### Detailed Description

In the following, the preferable embodiments of the present invention are explained in detail combining with the accompanying drawings so that the advantages and features of the present invention can be easily understood by the skilled persons in the art. It should be noted that the explanation on these implementations is to help understanding of the present invention, and is not intended to limit the present invention.

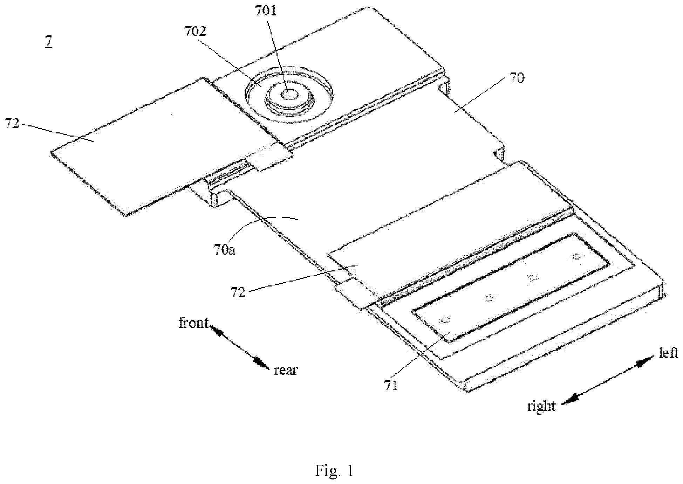

In the description of the present invention, it should be noted that the orientations or positional relationships indicated by the terms "upper", "lower", "left", "right", "front", "rear", "vertical", "horizontal", "inner" and "outer", etc. are based on those shown in the accompanying drawings, are only for the convenience of describing the present invention and simplifying the description, rather than indicating or implying that the indicated device(s) or element(s) must have a specific orientation, be constructed and operated in a specific orientation, and therefore should not be construed as a limitation of the present invention. The directional words mentioned in the following embodiments are all based on the arrow as shown in Fig. 1.

### Embodiment 1

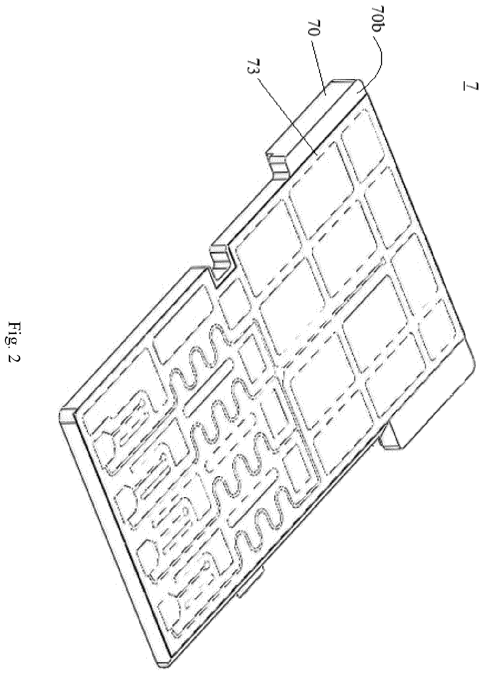

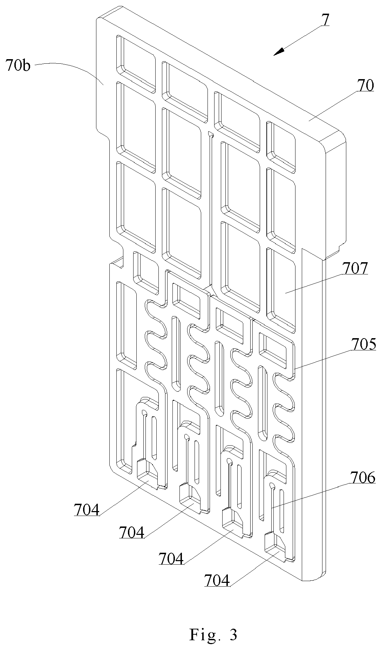

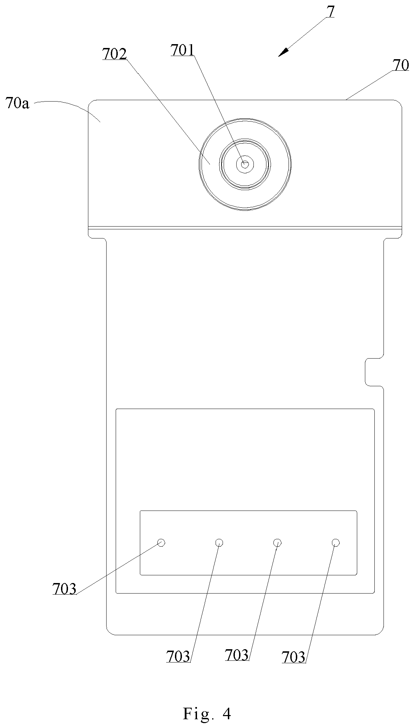

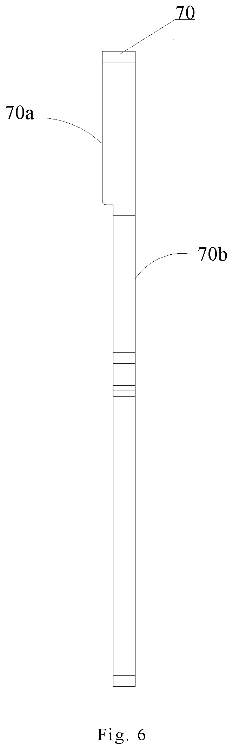

Referring to Fig. 1 to Fig. 6, a microfluidic chip 7 comprises a chip body 70, the chip body 70 is provided with a single sample adding port 701, a plurality of reacting chambers 704 and a plurality of exhaust ports 703. Each reacting chamber 704 is communicated with the sample adding port 701 through a first microchannel 705, and each first microchannel 705 has one or more bending sections. Each reacting chamber 704 is further communicated with a corresponding exhaust port 703 through a second microchannel 706. The microfluidic chip 7 is a miniaturized microfluidic chip, which does not need to be equipped with any piston or valve for controlling the liquid flow, and is compact and suitable for use in a hand-held LAMP detector. Wherein, the first microchannel 705 of each reacting chamber 704 is bent at one or more positions to form one or more bending sections, which can buffer the liquid flow, etc., and can also effectively prevent the reagent in the reacting chamber 704 from flowing out of the first microchannel 705 without providing a valve or piston, so as to avoid pollution to other reacting chambers 704. Reagents for amplification such as primers are pre-placed in the reacting chambers 704, the primers in different reacting chambers 704 can be the same or different to detect different pathogens. The thickness of the front portion of the chip body 70 provided with the sample adding port 701 is greater than that of other portions. The whole or at least a portion of the chip body 70 corresponding to the reacting chambers 704 is made of a material with a certain transparency (transparent or translucent) to allow laser light to be emitted and fluorescence to be emitted.

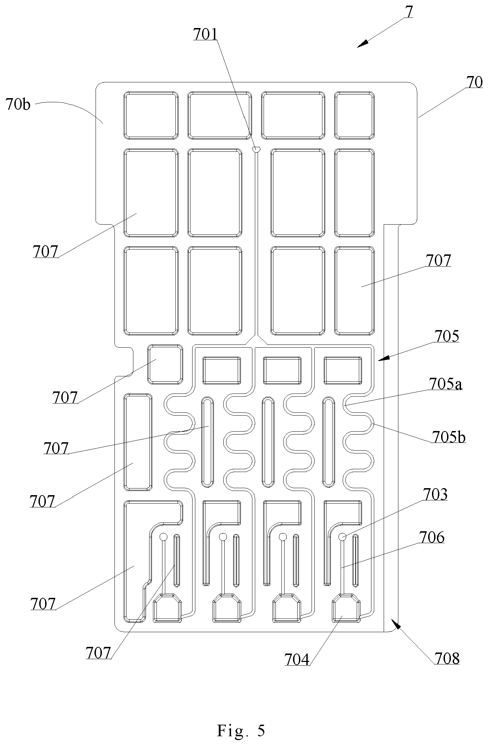

The (Each) bending section mentioned above comprises an arc-shaped bending section that is arc-shaped as a whole, and the center angle of the arc-shaped bending section is greater than 90 degrees, preferably 170 to 190 degrees. Further, the arc-shaped bending section comprises a first arc-shaped bending portion 705a and a second arc-shaped bending portion 705b, and the circle center of the first arc-shaped bending portion 705a is located on the right side thereof, and the circle center of the second arc-shaped bending portion 705b is located on the left side thereof, that is, the circle centers of the two are respectively located on the opposite sides of the first microchannel 705. The center angles of the first arc-shaped bending portion 705a and the second arc-shaped bending portion 705b both are 180 degrees. As shown in Fig. 5, the first arc-shaped bending portion 705a and the second arc-shaped bending portion 705b are staggered, and the adjacent first arc-shaped bending portion 705a and the second arc-shaped bending portion 705b are directly connected or connected through a linear channel, that is, each first microchannel 705 has a wavy section, which effectively prevents reagent such as primers in the reacting chambers 704 backflow.

In another embodiment, the above bending section comprises a plurality of first bending portions and a plurality of second bending portions, each first bending portion forms an acute angle as a whole, and each second bending portion forms an acute angle as a whole. The first bending portions and the second bending portions are staggered, and the adjacent first bending portions and the second bending portions are directly connected or connected through linear channels, that is, each first microchannel 705 has a Zigzag section.

The chip body 70 is a plate as a whole, which is integrally formed from plastic, such as by injection molding. The chip body 70 has a first surface 70a and an opposite second surface 70b, specifically in this embodiment, the first surface 70a is specifically the upper surface of the chip body 70, and the second surface 70b is specifically the lower surface of the chip body 70. The sample adding port 701 and the exhaust ports 703 are arranged on the first surface 70a of the chip body 70, and the reacting chambers 704, the first microchannels 705 and the second microchannels 706 are arranged on the second surface 70b of the chip body 70.

The microfluidic chip 7 further comprises a cover film 71 which is arranged on the surface of the chip body 70 and covers the exhaust ports 703 to allow gas to pass through but not allow liquid to pass through. The microfluidic chip 7 further comprises a first sealing film 72 for sealing the sample adding port 702 and/or the exhaust ports 703, and after the sample addition is completed, the first surface 70a of the chip body 70 is covered with the first sealing film 72 to isolate the sample adding port 701 and the exhaust ports 703 from the outside, and then carry out the amplification reaction to prevent pollution. The first surface 70a of the chip body 70 is further provided with an overflow groove 702 arranged around the sample adding port 701 to avoid polluting the first surface 70a of the chip body 70 during sample adding, so as to avoid affecting the tightness between the first sealing film 72 and the first surface 70a.

The microfluidic chip 7 further comprises a second sealing film 73 for closing the reacting chambers 704, the first microchannels 705 and the second microchannels 706, and the second sealing film 73 is arranged on the second surface 70b. The second surface 70b of the chip body 70 is provided with a plurality of recesses 707, the recesses 707 are specifically formed in the area of the second surface 70b without the reacting chambers 704, the first microchannels 705 and the second microchannels 706, they are adapted to the shapes and locations of the reaction tanks, the first microchannels 705 and the second microchannels 706, and have different shapes, sizes and positions, and avoid these reacting chambers, the first microchannels 705 and the second microchannels 706. The function of these recesses 707 is to facilitate the sealing of the second sealing film 73 and the chip body 70, to avoid bubbles after film pasting, and to prevent the chip body 70 from bending and deformation.

When the microfluidic chip 7 leaves the factory, the covering film 71 and the second sealing film 73 have been pre-attached to the proper position of the chip body 70, and isothermal amplification reagents, including primers, are pre-placed in each reaction tank; after the nucleic acid sample to be tested is added, the user covers the second sealing film 73 on the sample adding port 701 and the covering film 71 to close the sample adding port 701 and each exhaust ports 703.

The right side portion of the chip body 70 is provided with a ridge or an unfilled corner 708. The microfluidic chip 7 is mounted on the chip base of the LAMP detector to perform amplification test, accordingly, the chip base is correspondingly provided with a positioning slot that fits the positioning ridge or a projection that fits the unfilled corner 708, so as to avoid the reverse insertion of the microfluidic chip 7 and carry out a foolproof design.

In use, the microfluidic chip 7 is inserted into the hand-held LAMP detector horizontally from a chip port 10, wherein the microfluidic chip 7 has been pretreated. The pre-treatment process is as follows: adding a nucleic acid sample from the sample adding port 701 until the nucleic acid sample flow to the cover film 71 to seal the cover film 71, or even the redundant sample overflow into the overflow groove; covering the first sealing film 72 on the sample adding port 701 and the cover film 703 to close the sample adding port 701 and the respective exhaust ports 703, so that a closed environment isolated from the outside air is formed within the microfluidic chip 7, in which isothermal amplification and fluorescence detection are carried out.

The above-mentioned microfluidic chip 7 is able to keep the reagents in each reacting chamber from interfering with each other without a control valve or a piston, thus avoiding contamination; it is only necessary to add samples to the single sample adding port 701, which is convenient to use; because there is no control valve or piston, the overall volume of microfluidic chip 7 is small (as small as 34mm × 58mm × 3 mm), which greatly reduces the overall volume of the matched LAMP detector and is suitable for handheld detection.

### Embodiment 2

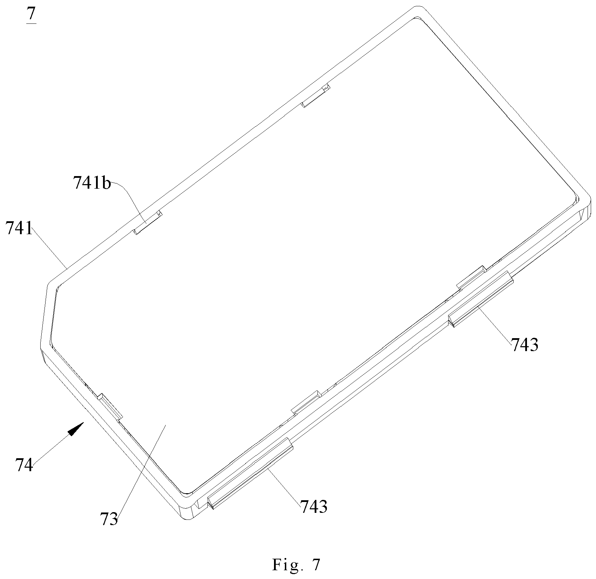

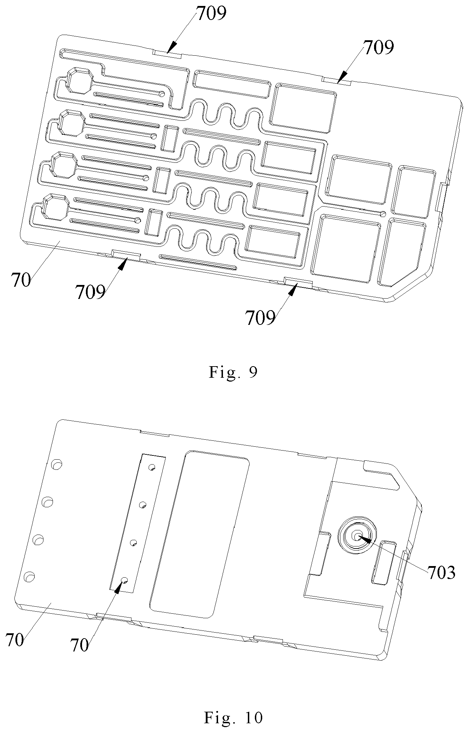

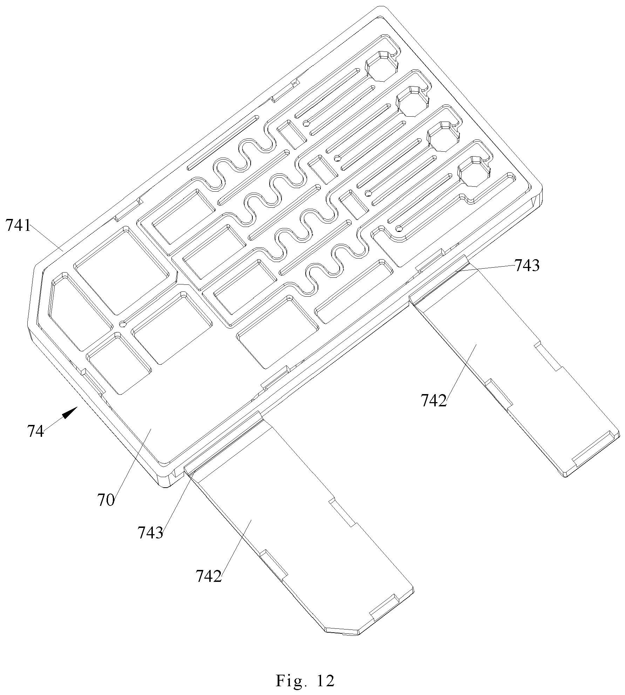

Fig. 7 to Fig. 13 show another embodiment according to the present invention. As shown in Fig. 7 to Fig. 13, the microfluidic chip 7 comprises a chip body 70 and a chip shell 74. The structure and configuration of the chip body 70 are basically the same as in Embodiment 1, by differing in that: there is no unfilled corner on the chip body 70 in this embodiment; the chip body 70 in this embodiment is not covered with the first sealing film in an initial state and during use; the peripheral edges of the chip body 70 in this embodiment are respectively provided with a clamping positioning mechanism which is matched with the chip shell 74.

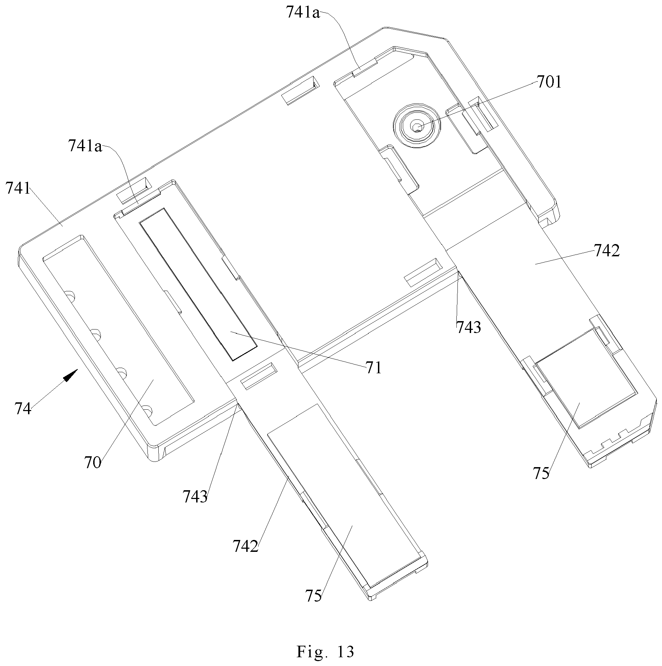

The chip shell 74 comprises a shell body 741 and a sealing folding panel 742, and the chip body 70 is mounted in the shell body 741. The microfluidic chip 7 has a detection state and an initial state, and in the detection state, the sealing folding panel 742 and the shell body 741 are connected to each other and covers the sample adding port 701 and/or the exhaust ports 703; in the initial state, the sealing folding panel 742 is detached from the sample adding port 701 and the exhaust ports 703. That is, in this embodiment, the sample adding port 701 and the exhaust ports 703 are not closed by covering the sealing film, but are closed by the sealing folding panel 742. Further, as shown in Fig. 13, the microfluidic chip 7 further comprises a sealing pad 75 pressed tightly on the sample adding port 701 and/or the exhaust ports 703 by the sealing folding panel 742 in the detection state. The sealing pad 75 is arranged on the sealing folding panel 742, for example, it is pasted on the sealing folding panel 742 through adhesive. In this embodiment, the chip shell 74 comprises two sealing folding panels 742, one sealing folding panel 742 is to close the sample adding port 701, and the other sealing folding panel 742 is to close the exhaust ports 703 under the cover film.

The shell body 741 has a first connector, and the sealing folding panel 742 has a second connector, in the detection state, the first connector is attached to the second connector, and in the initial state, the first connector and the second connector are detached from each other. Specifically, the first connector comprises a first lug 741a, and the second connector is clamped between the first lug 741a and the chip body 70 in the detection state. The second connector further has a first groove 742a for accommodating the first lug 741a.

The sealing folding panel 742 is connected with the shell body 741 and can rotate relative to the shell body 741. After the sample addition is completed, the sealing folding panel 742 is flipped over and pressed on the chip body 70. Further, the sealing folding panel 742 is connected to the shell body 741 through a deformable weak portion. Specifically in this embodiment, the weak portion is a folding line 743 extending along the long side direction of the chip body 70. The sealing folding panel 742 and the shell body 741 are formed by integral injection molding, the folding line 743 is formed after injection molding, and its thickness is less than that of its surrounding parts, so that it can be easily folded. In other embodiments, the sealing folding panel 742 can also be hinged to the shell body 741 through a hinge shaft.

The chip body 70 is embedded in the shell body 741, the shell body 741 is provided with a second lug 741b around the shell body 741, the above-mentioned clamping positioning mechanism specifically refers to a second recess 709 provided on the chip body 70 that fits the second lug 741b, and the second lug 741b is located in the second recess 709.

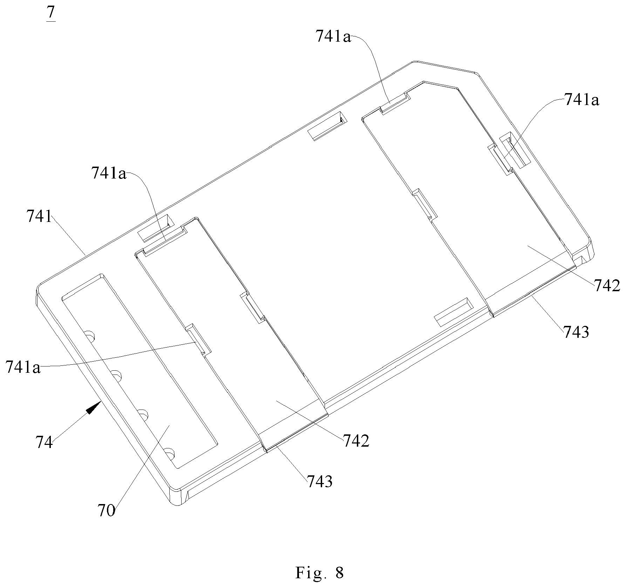

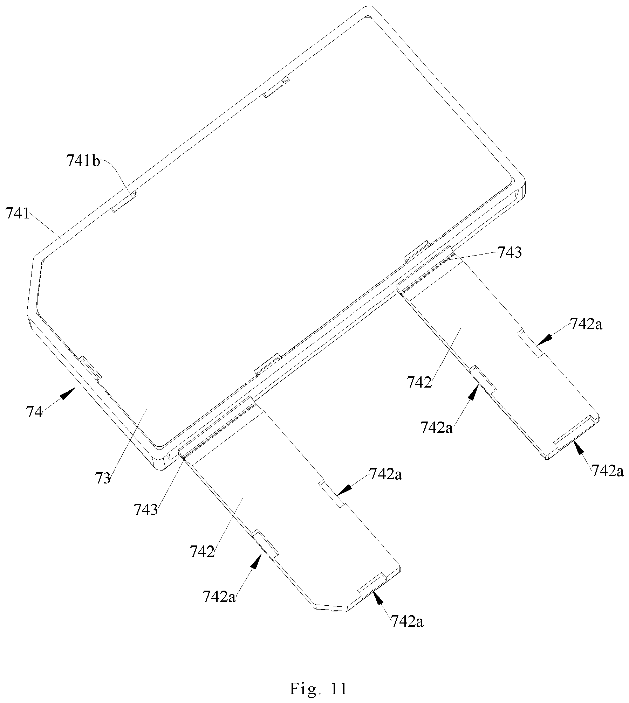

As shown in Figs. 11 to 13, initially, the front side of the chip body 70 is covered with a second sealing film 73, the exhaust ports 703 on the back face of the chip body are covered with a cover film 71, the chip body 70 is embedded in the chip shell 74, and the sealing folding panel 742 of the chip shell 74 extends outside the shell body 741, which is located on the side of the chip body 70. As shown in Figs. 7 and 8, in use, nucleic acid samples are added from the sample adding port 701 until the nucleic acid samples flow to the cover film 71 to seal the cover film 71, or even the additional samples overflow into the overflow groove; the sealing folding panel 742 is turned over to the back surface of the chip body 70 along the fold line 743, and its edge portion is pressed under the first lug 741a until the first lug 741a is clamped in the first groove 742a, so that the sealing pad 75 is compressed on the sample adding port 701 and the cover film 71 by the sealing folding panel 742, forming a closed environment isolated from the outside air in the microfluidic chip 7, in which isothermal amplification and fluorescence detection are carried out.

As shown in the description and the claims, the terms "comprising" and "containing" only indicate that the clearly identified steps and elements are included, and these steps and elements do not constitute an exclusive list, and the method or device may also include other steps or elements. The term "and/or" as used herein includes any combination of one or more of the associated listed items.

It should be noted that, unless otherwise specified, when a feature is called "fixed" or "connected" to another feature, it can be directly fixed or connected to another feature, or it can be indirectly fixed or connected to another feature. In addition, the description of the upper, lower, left, right and the like used in the present invention is only relative to the relative position relationship of the components of the present invention in the drawings.

The singular forms "a", "said", and "the" are intended to include the plural forms as well, unless the context clearly dictates otherwise.

The embodiments described above are only for illustrating the technical concepts and features of the present invention, are preferred embodiments, and are intended to make those skilled in the art being able to understand the present invention and thereby implement it, and should not be concluded to limit the protective scope of this invention. Any equivalent variations or modifications according to the present invention should be covered by the protective scope of the present invention.

## Claims

1. An LAMP-based microfluidic chip, comprising a chip body having a sample adding port, a plurality of reacting chambers and a plurality of exhaust ports, **characterized in that,** each of the plurality of reacting chambers is communicated with the sample port via a first microchannel, each first microchannel has one or more bending sections, and each of the plurality of reacting chambers is further communicated with one of the plurality of exhaust ports via a second microchannel.

2. The microfluidic chip according to claim 1, **characterized in that,** the bending section comprises an arc-shaped bending section that is arc-shaped as a whole.

3. The microfluidic chip according to claim 2, **characterized in that,** the arc-shaped bending section comprises a first arc-shaped bending portion and a second arc-shaped bending portion, and a circle center of the first arc-shaped bending portion and a circle center of the second arc-shaped bending portion are respectively located on two opposite sides of the first microchannel.

4. The microfluidic chip according to claim 3, **characterized in that,** a plurality of said first arc-shaped bending portions and a plurality of said second arc-shaped bending portions are interleaved, and adjacent first and second arc-shaped bending portions are directly connected or connected through a linear channel.

5. The microfluidic chip according to claim 2, **characterized in that,** a center angle of the arc-shaped bending section is greater than 90 degrees.

6. The microfluidic chip according to claim 1, **characterized in that,** there is a single sample adding port, an overflow groove is further provided on the chip body, and the overflow groove is communicated with or surrounds the sample adding port.

7. The microfluidic chip according to claim 1, **characterized in that,** a positioning ridge is arranged on a left or right side of the chip body.

8. The microfluidic chip according to claim 1, **characterized in that,** the microfluidic chip further comprises a cover film which is arranged on a surface of the chip body and covers the exhaust ports to allow gas to pass through but not allow liquid to pass through.

9. The microfluidic chip according to claim 1, **characterized in that,** the microfluidic chip further comprises a first sealing film for sealing the sample adding port and/or the exhaust ports.

10. The microfluidic chip according to claim 1, **characterized in that,** the sample adding port and the exhaust ports are arranged on a first surface of the chip body, the reacting chambers are arranged on a second surface of the chip body, and the microfluidic chip further comprises a second sealing film for closing the reacting chambers, and the reacting chambers are covered by the second sealing film.

11. The microfluidic chip according to claim 10, **characterized in that,** there is a plurality of recesses on the second surface of the chip body, and the recesses are covered by the second sealing film.

12. The microfluidic chip according to claim 10, **characterized in that,** the first microchannels and the second microchannels are arranged on the second surface of the chip body, and covered by the second sealing film.

13. The microfluidic chip according to claim 1, **characterized in that,** the microfluidic chip comprises a chip shell comprising a shell body and a sealing folding panel, the chip body is mounted in the shell body, and the microfluidic chip has a detection state and an initial state, and the sealing folding panel is connected to the shell body and covers the sample adding port and/or the exhaust ports in the detection state; the sealing folding panel is detached from the sample adding port and the exhaust ports in the initial state.

14. The microfluidic chip according to claim 13, **characterized in that,** the microfluidic chip further comprises a sealing pad that is pressed on the sample adding port and/or the exhaust ports by the sealing folding panel in the detection state.

15. The microfluidic chip according to claim 14, **characterized in that,** the sealing pad is arranged on the sealing folding panel.

16. The microfluidic chip according to claim 13, **characterized in that,** the shell body comprises a first connector, the sealing folding panel is provided with a second connector, the first connector and the second connector are attached to each other during the detection state, and the first connector and the second connector are detached from each other during the initial state.

17. The microfluidic chip according to claim 16, **characterized in that,** the first connector comprises a first lug, and the second connector is clamped between the first lug and the chip body during the detection state.

18. The microfluidic chip according to claim 16, **characterized in that,** the sealing folding panel is connected to the shell body and is configured to rotate relative to the shell body.

19. The microfluidic chip according to claim 18, **characterized in that,** the sealing folding panel is connected to the shell body through a deformable weak portion.

20. The microfluidic chip according to claim 19, **characterized in that,** the weak portion is a folding line extending along a long side direction or a short side direction of the chip body.

21. The microfluidic chip according to claim 13, **characterized in that,** the chip body is embedded in the shell body, the shell body is provided with a second lug, the chip body is provided with a second groove that fits the second lug, the second lug is located within the second groove.
